# EUROPEAN PATENT APPLICATION

(11) **EP 4 629 653 A1**
(43) Date of publication of application: **08.10.2025**
(21) Application number: 25164193.2
(22) Date of filing: 17.03.2025
(51) Int. Cl.: H04N 23/62, H04N 23/63, H04N 23/66, H04N 23/661, H04N 23/69, H04N 23/695, H04N 23/90, H04N 7/18

(54) **CONTROL APPARATUS, CONTROL METHOD, AND PROGRAM**

(30) Priority: 01.04.2024 JP 2024059071; 26.12.2024 JP 2024230272
(71) Applicant: CANON KABUSHIKI KAISHA, Tokyo 146-8501 (JP)
(72) Inventor: ISHII, Atsushi, Tokyo, 146-8501 (JP)
(74) Representative: Canon Europe Limited

(57) **Abstract**

A control apparatus for controlling a plurality of terminals includes an association unit configured to associate a controlled terminal serving as a control target and a terminal different from the controlled terminal as an associated terminal, the control information including information indicating the associated terminal associated by the association unit, a reception unit configured to receive an instruction on controlling a terminal from among the plurality of terminals, a determination unit configured to determine a terminal to be controlled, based on the association unit and the control information, and a control unit configured to control the plurality of terminals, based on the instruction on controlling the terminal received by the reception unit and the control information, wherein in a case where the reception unit receives a predetermined instruction, the determination unit determines to control both the controlled terminal and the associated terminal, based on the control information.

## Description

### BACKGROUND OF THE INVENTION

### Field of the Invention

The present invention relates to a control apparatus, a control method, and a program.

### Description of the Related Art

In recent years, network cameras including an image capturing apparatus which is remotely controllable, and control apparatuses for image creation have been widespread. A user remotely performs settings about image capturing, such as image capturing directions, on the image capturing apparatus and/or a pan/tilt head, by operating a controller or the like for controlling the image capturing apparatuses via a network.

A controller capable of controlling a plurality of image capturing apparatuses is widespread. The plurality of image capturing apparatuses is controlled with a single controller by switching control target image capturing apparatuses. In the image creation using a plurality of image capturing apparatuses, it is important to reduce the complexity of user's operation for the plurality of image capturing apparatuses. For example, Japanese Patent Application Laid-open No. 2003-348428 discusses an imaging system in which a child camera disposed at a position different from a parent camera is controlled to capture an object image that is being captured by the parent camera. In this case, by operating the parent camera, pan, tilt, and zoom of both the parent camera and the child camera that is not a control target is changeable. However, with the method discussed in Japanese Patent Application Laid-open No. 2003-348428, a user cannot control the child camera.

### SUMMARY OF THE INVENTION

The present invention is directed to a technique for controlling a plurality of terminals without a procedure of switching the control target terminals.

According to a first aspect of the present invention, there is provided a control apparatus as specified in claims 1 to 9. According to a second aspect of the present invention, there is provided a control method as specified in claim 10. According to a third aspect of the present invention, there is provided a computer program as specified in claim 11.

Further features of the present invention will become apparent from the following description of embodiments with reference to the attached drawings.

### BRIEF DESCRIPTION OF THE DRAWINGS

Fig. 1 is a diagram illustrating a configuration example of a control system according to a first embodiment.
Fig. 2 is a block diagram illustrating a configuration example of a controller according to the first embodiment.
Fig. 3 is a table illustrating an example of connected terminal information according to the first embodiment.
Fig. 4 is a diagram illustrating a configuration example of an operation interface according to the first embodiment.
Fig. 5A is a diagram illustrating a setting screen of associated terminal information according to the first embodiment, and Fig. 5B is a table illustrating the associated terminal information according to the first embodiment.
Fig. 6 is a flowchart illustrating control processing according to the first embodiment.
Fig. 7 is a table illustrating connected terminal information according to a second embodiment.
Fig. 8 is a diagram illustrating a setting screen of associated terminal information according the second embodiment.
Fig. 9 is a flowchart illustrating setting processing of the associated terminal information according to the second embodiment.
Fig. 10 is a flowchart illustrating an example of control processing according to a third embodiment.
Fig. 11 is a flowchart illustrating an example of display control processing according to a fourth embodiment.
Fig. 12A is a diagram illustrating an example of a graphical user interface (GUI) displaying information about a controlled terminal according to the fourth embodiment, and Fig. 12B is a diagram illustrating an example of a GUI displaying information about the controlled terminal and an associated terminal according to the fourth embodiment.
Fig. 13A is a diagram illustrating a configuration example of an operation interface on which the information about the controlled terminal according to the fourth embodiment is reflected, and Fig. 13B is a diagram illustrating a configuration example of an operation interface on which the information about the controlled terminal and an associated terminal according to the fourth embodiment is reflected.

### DESCRIPTION OF THE EMBODIMENTS

The embodiments will be described in detail below with reference to the accompanying drawings. It should be noted that the embodiments are not intended to limit the invention as defined by the claims. While the embodiments include multiple features, not all the features are essential to the invention, and the features may be combined arbitrarily. In the accompanying drawings, the same or similar components are denoted by the same reference numerals, and the redundant descriptions are omitted.

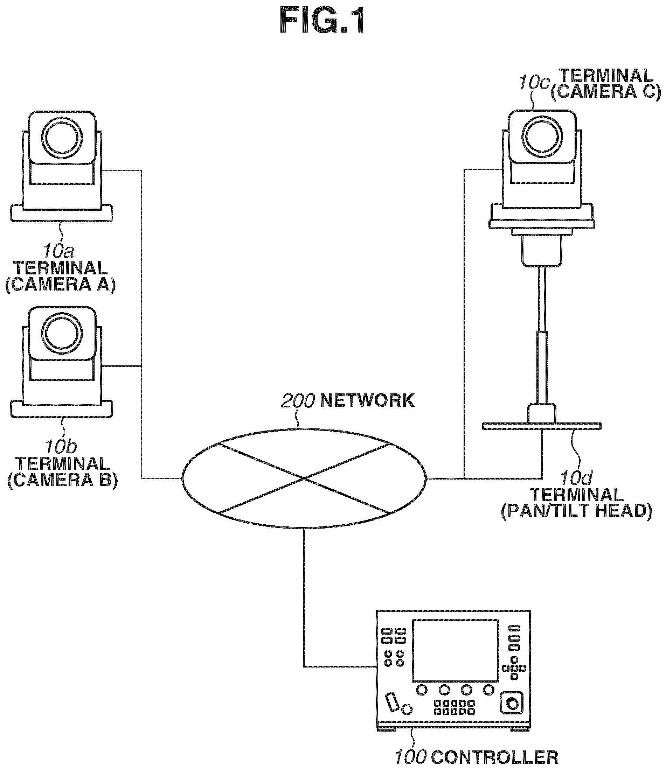

Fig. 1 is a diagram illustrating a configuration example of a control system according to a first embodiment. In the control system according to the present embodiment, a controller 100 serving as an information processing apparatus, and four terminals 10a to 10d are connected via a network 200, but it is not limited thereto. For example, they may be connected via a Serial Digital Interface (SDI) or a High-Definition Multimedia Interface (HDMI^{®}). The controller 100 controls the terminals 10a to 10d based on a camera control communication protocol and acquires information about the terminals 10a to 10d. Among the terminals 10a to 10d, the terminal 10d is a pan/tilt head compliant to the camera control communication protocol and is controllable from the controller 100 so that the height is changed, and the base is rotated via communications.

While, in the present embodiment, total four terminals including cameras of the terminals 10a to 10c and the pan/tilt head of the terminal 10d are connected to the controller 100, the number and kind of the terminals are not specifically limited.

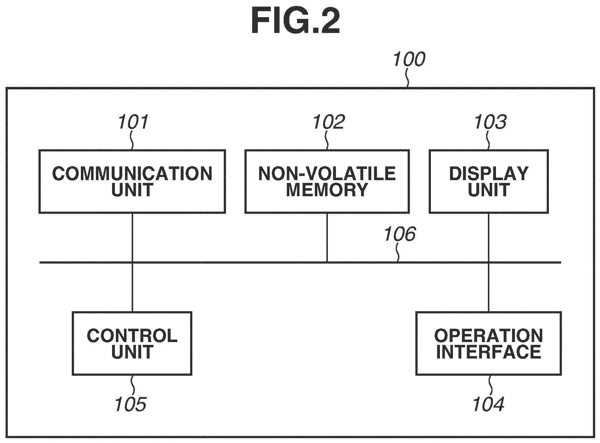

Fig. 2 is a block diagram illustrating an internal configuration example of the controller 100 according to the present embodiment.

The controller 100 includes a communication unit 101, a non-volatile memory 102, a display unit 103, an operation interface 104, a control unit 105, and an internal bus 106 enabling intercommunications.

The communication unit 101 is a network interface for communicating with external devices via a Local Area Network (LAN) and plays a role of communications with terminals (devices) via a communication medium, such as Ethernet. Herein, the "communications" are transmissions and receptions of commands to and from the terminals 10a to 10d, and receptions of captured images. In a case where the controller 100 communicates with the terminals 10a to 10d based on instructions from the control unit 105, the communications are performed via the communication unit 101.

The non-volatile memory 102 is a storage device with a non-volatile property, such as a flash memory, a hard disk drive (HDD), a solid state drive (SSD), and a secure digital (SD) card. The non-volatile memory 102 is used as a permanent storage area for programs or the like to control the controller 100 by the control unit 105, such as an operating system (OS), and various kinds of programs and data, and also used as a storage area for temporarily storing various kinds of data. While, in the present embodiment, the non-volatile memory 102 includes an SSD, the configuration is not limited thereto.

The display unit 103 is configured, for example, a liquid crystal panel and a backlight, and is a display unit for displaying captured images acquired from the terminals 10a to 10c (cameras A to C) and a setting screen. In the present embodiment, the display unit 103 displays images captured by the terminals 10a to 10c, and settings of the terminals 10a to 10d. While, in the present embodiment, an example in which the controller 100 includes the display unit 103 is illustrated, it is not limited thereto. For example, a display monitor for displaying captured images and a controller may be separately provided.

The operation interface 104 is an interface for receiving a user's operation to the controller 100. The operation interface 104 is an interface for inputting operation information (control instruction) of a plurality of buttons and a joystick provided on a housing of the controller 100. A user operates an operation member, such as a joystick serving as the operation interface 104 or a graphical user interface (GUI) displayed on the display unit 103, to input the operation information to the control unit 105. In this way, a setting of the controller 100 itself is performed, and the terminals 10a to 10d connected to the controller 100 are controlled. Details thereof will be described below.

The control unit 105 outputs to the communication unit 101 an Internet Protocol (IP) address of a control target and a packet to be transmitted to the IP address. This packet includes, for example, a type of a target function, such as pan and tilt, and a command indicating what control is performed on the target function, and when any one of the terminals 10a to 10d receives this command, the operation set for the corresponding terminal is performed. In response to a receipt of a response packet from the terminal, the communication unit 101 outputs the received information to the control unit 105, the control unit 105 acquires a state of the terminal according to the information and determines success or failure of the communication.

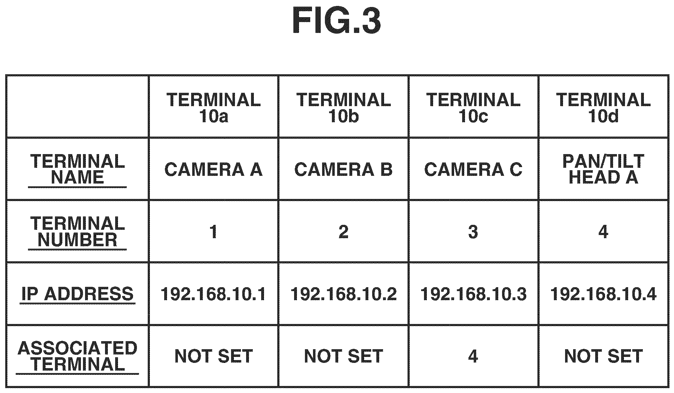

The control unit 105 includes a volatile memory (not illustrated) to load a program stored in the non-volatile memory 102 therein and executes the loaded program to control each block of the controller 100. The not-illustrated volatile memory is a storage device, such as a dynamic random access memory (DRAM), to temporarily store a computer program executed by the control unit 105. The OS and the various kinds of programs and data are loaded in the volatile memory, and the volatile memory provides a work area that is used when the control unit 105 performs processing. Further, the volatile memory is used as a work area for the OS or the various kinds of programs. The control unit 105 manages the connected terminals 10a to 10d and holds connected terminal information configured of the terminal number of the associated terminal to be controlled in association, in a case where the terminal name, the terminal number, or the IP address of the terminal is selected as a control target controlled terminal. Fig. 3 illustrates an example of the connected terminal information. A user can arbitrarily set the terminal name and the terminal number. The user can set any terminal as an associated terminal that is associated with the control target controlled terminal, and store the setting about the associated terminal as associated terminal information. The associated terminal information will be described below. In the present embodiment, as illustrated in Fig. 3, the terminal 10d is set to the terminal 10c as the associated terminal by the user, but it is not limited thereto. For example, when the control unit 105 acquires information indicating that the terminal 10c (camera C) and the terminal 10d (pan/tilt head A) are connected via the communications between the controller 100, and the camera C and the pan/tilt head A, the control unit 105 may set the pan/tilt head A as the associated terminal of the camera C, and may store the setting as the associated terminal information.

In response to displaying of a menu screen on the display unit 103 and receiving (reception unit) of an operation on the menu screen via the operation interface 104, the control unit 105 performs a setting of the controller 100 and controls the connected terminals. For example, when the registration of the associated terminal and the setting of the control on the associated terminal are performed via the operation on the menu screen, the control unit 105 performs processing to transmit a control instruction to the associated terminal when the operation set as the control to the associated terminal is performed. Details of the control processing to the associated terminal will be described below.

### <Operation Method of Operation Member>

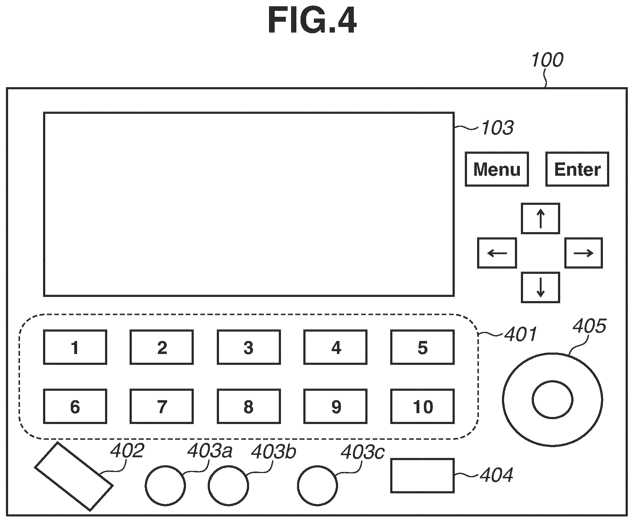

An example of the housing of the controller 100 according to the present embodiment will be described with reference to Fig. 4. The controller 100 includes the display unit 103, and selection buttons 401, a zoom rocker switch 402, dials 403a to 403c, a focus dial 404, and a joystick 405 included in the operation interface 104. The configuration of the controller 100 according to the present embodiment is not limited thereto, and for example, a GUI that displays the selection buttons 401 on the display unit 103 may be used. The selection buttons 401 are buttons on the housing of the controller 100, and numbers of 1 to 10 are assigned to respective buttons. For example, in a case where the display unit 103 changes to a screen for switching a control target terminal, and when a user presses the "1" button from among the selection buttons 401, the terminal with the terminal number 1 is shifted to a state of being selected as a control target. In this state, the terminal with the terminal number 1 selected as the control target is operable via the zoom rocker switch 402 or the joystick 405, which will be described below in detail. The zoom rocker switch 402 is disposed on the housing of the controller 100 and performs zoom control of the control target terminal in accordance with operation performed on the zoom rocker switch 402. The joystick 405 is disposed on the housing of the controller 100 and performs pan/tilt control of the control target terminal in accordance with operation performed on the joystick 405 in up, down, right, and left directions.

In response to an "Enter" button being pressed in a state where a preset registration/delete screen is displayed on the display unit 103, a user can instruct the connected terminal to register the predetermined number as a preset number. The preset registration will be described below. The user can instruct the connected terminal to perform a preset execution to the connected terminal by selecting the preset number registered on the preset execution screen.

### <Setting of Associated Terminal>

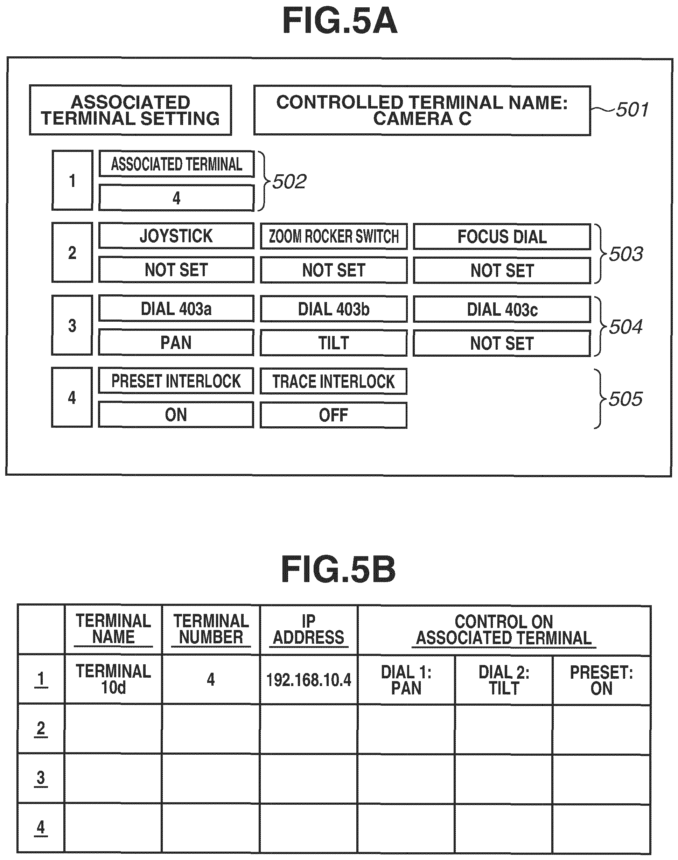

The registration of the associated terminal and the setting of the operation will be described with reference to Figs. 3, 5A, and 5B. Fig. 5A is a diagram illustrating an example of a setting screen of the associated terminal information, and Fig. 5B is a table illustrating an example of the associated terminal information held by the control unit 105.

The registration of the associated terminal according to the present embodiment is performed on a menu screen illustrated in Fig. 5A. The terminal displayed in an item 501 is a control target controlled terminal, and the controlled terminal is to be switched by changing the item 501. In the present embodiment, the terminal 10c (terminal name: camera C) is set as the terminal to which an associated terminal is to be set.

The associated terminal is set by the user performing operation on the operation interface 104 to designate a terminal number of the terminal to be associated with the controlled terminal as a setting value in an item 502, in a state where the menu screen illustrated in Fig. 5A is displayed on the display unit 103. It is also possible not to set the associated terminal by designating "not set" as the setting value. In response to the associated terminal being set in the item 502, the information about the associated terminal is stored in the control unit 105. In a case where the operation for the associated terminal is acquired via the operation interface 104, the control unit 105 transmits a control command to the designated associated terminal via the communication unit 101.

The associated terminal to be associated with the terminal 10c is set by inputting its terminal number to the item 502.

In the present embodiment, the pan/tilt head (terminal 10d) is set as the terminal to be associated with the terminal 10c, but the kind of the terminal is not limited thereto. For example, the camera A (terminal 10a) may be set as an associated terminal of the camera C (terminal 10c). While, in the present embodiment, the terminal name registered in the connected terminal information in Fig. 3 is designated in the item 501, and the terminal number in Fig. 3 is designated in the item 502, it is not limited thereto. For example, any information that is usable to identify the target terminal, such as a terminal name, a terminal number, or an IP address registered in the connected terminal information in Fig. 3, and a GUI, such as an icon indicating the position of the terminal, is utilizable.

### <Operation Setting of Associated Terminal>

With reference to Figs. 5A and 5B, the setting about the operation of the associated terminal will be described. Items 503 and 504 are items about the settings for transmission of a control command to the associated terminal in accordance with operation performed on an operation member included in the operation interface 104, and the item 504 is a setting about a function for transmission of control commands to both of the controlled terminal and the associated terminal. The controller 100 controls the associated terminal when any operations set in the items 503 or 504 is performed, in a state where terminal 10c is selected in the item 501 as the control target terminal. More specifically, a case where the terminal 10c is registered as a controlled terminal, and the terminal 10d is registered as an associated terminal of the terminal 10c will be described. In a case where a user operates the dial 403a of the operation interface 104, the control unit 105 transmits a command indicating a pan control to the terminal 10d.

The menu items illustrated in the items 503 and 504 are settings about interlock control that is performed in a case where the user operates the operation interface 104, and in a case where "not set" is set as illustrated in the item 503, the operation is processed as the operation to the controlled terminal. More specifically, in a case where the joystick 405, the zoom rocker switch 402, the focus dial 404, or the dial 403c of the operation interface 104 is operated, the control is performed on the terminal 10c serving as the controlled terminal. In a case where the setting is made as illustrated in the item 504, the operation is processed as an operation to the associated terminal. More specifically, in a case where the user operates the dials 403a or 403b, the controller 100 controls the terminal 10d registered as the associated terminal.

### <Preset Operation Setting>

An item 505 is a setting about a preset function and a trace function, and in a case where this setting is ON, a corresponding control instruction is transmitted to each of the controlled terminal and the associated terminal. The control system according to the present embodiment stores the setting as the preset setting by the control unit 105 associating the registered information about the terminal with the preset number. For example, in a case where a pan/tilt/zoom (PTZ) camera is connected, positions of a pan drive unit, a tilt drive unit, and a lens driving unit are registered as preset positions (settings) by associating each of the positions with a preset number. In a case where a camera and a pan/tilt head movable up and down are respectively registered as a controlled terminal and an associated terminal, the preset positions of the two terminals are registered by associating, to the preset number, the position of the lens driving unit or the zoom ratio of the camera and the information about the height of the pan/tilt head. When a user inputs a predetermined preset number via the operation interface 104 in a state where the preset interlock is ON, the control unit 105 transmits a control instruction to the terminal to drive the terminal to the preset position corresponding to the present number. The terms "preset" and the "trace" described above each refer to a calling function of the setting stored on the terminal or of an operation history, and in this example, in a case where a preset call instruction is issued to the operation target terminal, the preset call instruction is also transmitted to the interlock control target terminal. In a case where the terminal acquires a control command instructing a registration of the preset including the preset number, the terminal records the current position and the information about the setting on the terminal. After the registration, in a case where the controller 100 transmits a control command including the preset number to the terminal, the terminal calls the stored positions and settings, and reflects the called positions and settings on the movement to the preset positions and the settings. In a similar manner, by recording the operation history of the trace function to a predetermined number, in a case where the controller 100 transmits a control command to instruct an execution of the trace function, the controller 100 controls the terminals based on the stored operation history. In registration of the preset positions, in a case where the associated terminal is set to the controlled terminal, the same preset number as the controlled terminal is registered as the preset position of the associated terminal.

### <Control Processing on Controlled Terminal and Associated Terminal>

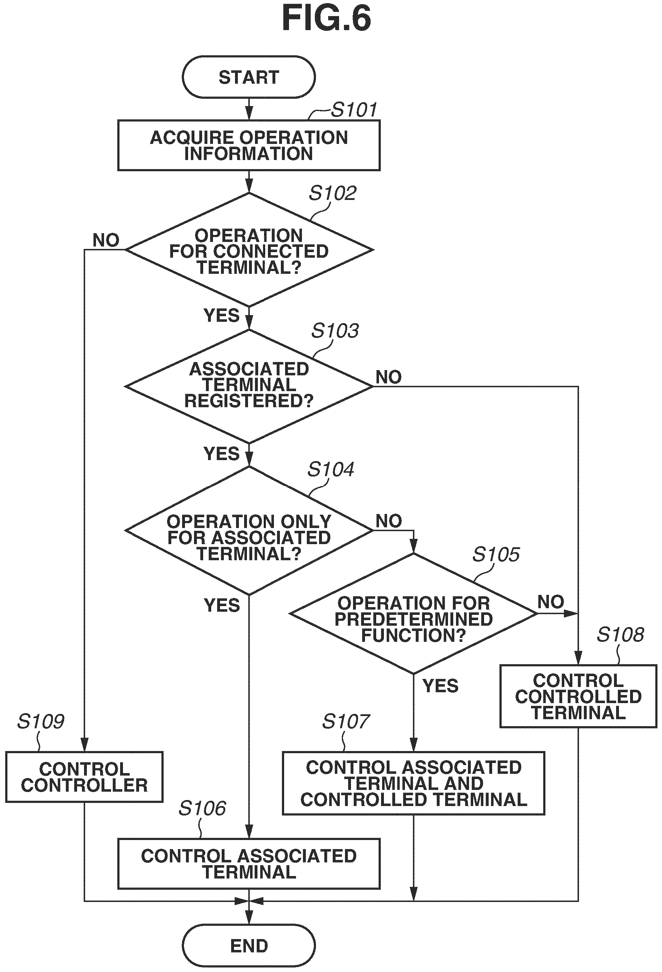

Fig. 6 is a flowchart illustrating an example of the control processing for a terminal according to the present embodiment. The control processing for the terminal by the control unit 105 will now be described with reference to the flowchart in Fig. 6. In the present embodiment, as illustrated in Fig. 1, the terminals 10a to 10d are connected with the controller 100, and this information is held by the control unit 105 as the connected terminal information. Further, the terminal 10d is set as an associated terminal of the terminal 10c, and the control unit 105 holds the setting as the associated terminal information (control information for the associated terminal).

The flowchart illustrated in Fig. 6 starts when the control unit 105 acquires a user's operation via the operation interface 104. Further, the flowchart ends when the control unit 105 performs a control based on a user's input. This flowchart is implemented by the control unit 105 loading OS, and various kinds of programs and data in a volatile memory for temporarily storing computer programs to be executed, and executing them. The flowchart in Fig. 6 is executed when the control unit 105 acquires information about an operation from a user via the operation interface 104 and executes the control processing for the terminal based on the information about the operation.

In step S101, the control unit 105 acquires the operation information input via the operation interface 104. The control unit 105 writes the acquired operation information into the non-volatile memory 102, and the processing proceeds to step S102.

In step S102, the control unit 105 determines whether the operation information acquired in step S101 is operation information for the connected terminal. In a case where the control unit 105 determines that the operation information is for the connected terminal (YES in step S102), the processing proceeds to step S103. On the other hand, in a case where the control unit 105 determines that the operation information is not for the connected terminal (NO in step S102), the processing proceeds to step S109. The operation information for the connected terminal indicates, for example, operation information about the control of the connected terminal. For example, in a case where the joystick 405 is operated, the control unit 105 determines that the operation indicates the information about the control target connected terminal (YES in step S102), the processing proceeds to step S103. In a case where the operation relating to the controller setting change is performed, the control unit 105 determines that the operation does not indicate the information about the connected terminal (NO in step S102), and the processing proceeds to step S109.

In step S103, the control unit 105 acquires the connected terminal information from the non-volatile memory 102 to determine whether an associated terminal associated with the control target controlled terminal has been registered. In a case where the control unit 105 determines that an associated terminal has been registered (YES in step S103), the processing proceeds to step S104. In a case where the control unit 105 determines that no associated terminal is registered (NO in step S103), the processing proceeds to step S108.

In step S104, the control unit 105 determines whether the operation information acquired in step S101 is operation information for the associated terminal alone, based on the associated terminal information. In a case where the control unit 105 determines that the information is for the associated terminal alone (YES in step S104), the processing proceeds to step S106. On the other hand, in a case where the control unit 105 determines that the information is not for the associated terminal alone (NO in step S104), the processing proceeds to step S105. In the present embodiment, in the associated terminal information illustrated in Fig. 5B, the operations performed on the dials 403a and 403b are set to be determined as the control for the associated terminal. In a case where the control unit 105 acquires the operation information about the operation performed on the dial 403a or 403b, the control unit 105 determines that the operation indicates the operation information on the associated terminal (YES in step S104), and the processing proceeds to step S106.

In step S105, the control unit 105 determines whether the operation information acquired in step S101 is operation information for a predetermined function, based on the associated terminal information. In a case where the control unit 105 determines that the acquired operation information is the operation information for the predetermined function (YES in step S105), the processing proceeds to step S107. In a case where the control unit 105 determines that the acquired operation information is not the operation information for the predetermined function (NO in step S105), the processing proceeds to step S108. In the present embodiment, in a case where the preset function is set ON in the associated terminal information illustrated in Fig. 5B and the control unit 105 acquires the operation information instructing the execution of the preset function via the operation interface 104 (YES in step S105), the processing proceeds to step S107.

In step S106, the control unit 105 (determination unit) performs control on the associated terminal based on the associated terminal information, and then the processing of the flowchart ends. In the present embodiment, in a case where the dial 403a or 403b is operated for the terminal 10c based on the associated terminal information illustrated in Fig. 5B, and the preset function is executed, the control unit 105 performs control on the terminal 10d serving as an associated terminal. More specifically, in a case where the dial 403a is operated, the control unit 105 transmits a pan control instruction, in a case where the dial 403b is operated, the control unit 105 transmits a tilt control instruction, and in a case where the preset function is executed, the control unit 105 transmits a preset call instruction.

In step S107, the control unit performs control on the associated terminal and the controlled terminal. In the present embodiment, whether to perform control on the associated terminal alone is determined for each setting item in advance. On the menu screen illustrated in Fig. 5A, the items other than the preset interlock and the trace interlock perform control on the associated terminal alone, and in a case where the control unit 105 acquires the preset execution instruction for the controlled terminal via the operation interface 104 (YES in step S105), the processing proceeds to step S107.

In step S108, the control unit 105 performs control on the controlled terminal and ends the processing of this flowchart.

In step S109, the control unit 105 performs control on the controller 100, and then ends the processing of this flowchart.

As described above, according to the present embodiment, another terminal is registered for the controlled terminal to the controller 100 as an associated terminal, and the controller 100 is set, whereby a control command is transmitted to the associated terminal for a predetermined operation, or control commands are transmitted to both the associated terminal and the controlled terminal. In this way, a plurality of terminals is operated at a time without switching the controlled terminals. For example, in a case where control instructions are issued to a plurality of terminals at a time by one operation, only a same control instruction is transmitted, but according to the present embodiment, a desired operation is performed for each of the terminals, by setting a part of the operation of the control target to the associated terminal. In this way, the pan/tilt/zoom (PZT) camera including the PTZ drive units drives the PZT drive units, and at a time the pan/tilt head movable up and down is driven up and down. While, in the present embodiment, the description is given of the case where the control command including the information about the preset number is transmitted to each of the terminals, like the preset function, it is not limited thereto. For example, the controller 100 may hold the preset number, and the preset settings of the terminal, to transmit different control commands at a time.

In the present embodiment, the description is given of the example in which one terminal is registered for one terminal as the associated terminal. However, the number of terminals to be registered as the associated terminal is not limited to one. For example, an associated terminal and a control to be performed may be set for each operation. In the present embodiment, as the contents of the control setting, the example in which the control to be performed in response to the operation information being acquired via the operation interface 104 is set is described. However, the setting of the control to be performed may be omitted. For example, the control performed on the associated terminal may be fixed to the same control as that performed on the operation target at a time of non-interlocking. In the present embodiment, the description is given of the case where the control setting is made on the operation of the operation member, or the function corresponding to the operation. However, the interlock control setting may be made to be associated with conditions other than the operation member and the function. For example, whether to perform the control may be determined depending on the state of the operation target terminal. In the present embodiment, the description is given of the case where whether to perform control on the associated terminal alone in execution of the control is determined based on the setting items in advance. However, whether to perform control on the associated terminal alone in execution of the control may be set individually for each setting item.

In a second embodiment, an interlock control setting in a case where there is a function not supported by an operation target terminal will be described. A configuration of a controller according to the present embodiment is similar to that according to the first embodiment, and the redundant descriptions are omitted. Points different from the first embodiment will be described below. While, in the first embodiment, a user performs the operation setting of the associated terminal, in the present embodiment, a description will be given of an example in which the controller 100 acquires functions supported by a terminal, and an operation setting of an associated terminal is performed not via the user's operation.

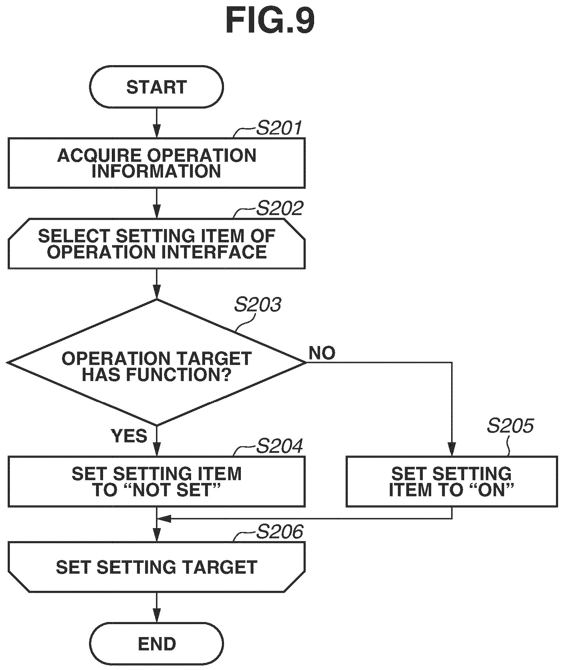

Fig. 9 is a flowchart illustrating an example of an operation setting of an associated terminal according to the present embodiment.

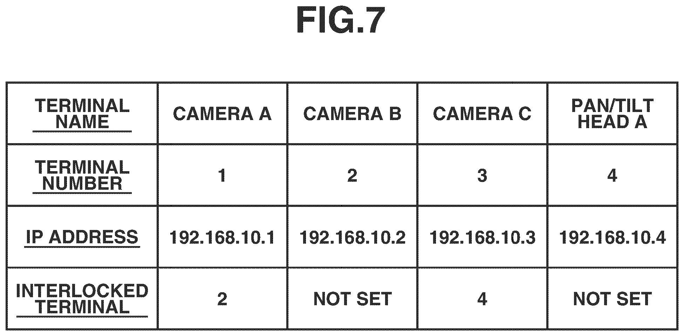

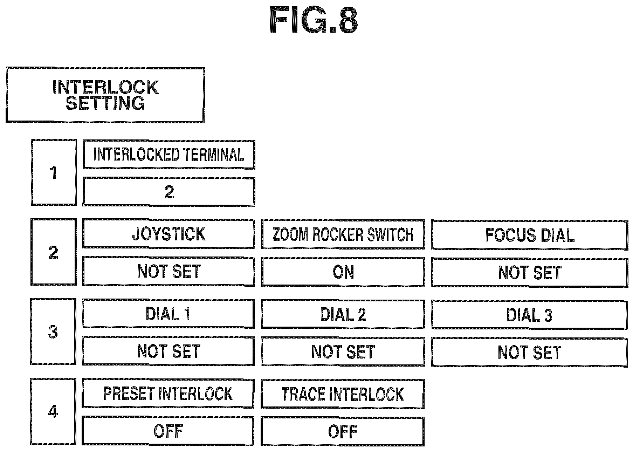

The operation setting of the associated terminal by the control unit 105 will be described with reference to the flowchart in Fig. 9. In the present embodiment, Fig. 9 illustrates a processing flow until the associated terminal information is set to be the associated terminal information in Fig. 8, which illustrates a case where the terminal 10b is set as the associated terminal of the terminal 10a in addition to the connected terminal information in Fig. 3, and the associated terminal information is set to the state illustrated in Fig. 7. Here, the operation of the zoom rocker switch 402 is assigned to control the zoom function. The terminal 10a does not have a zoom function but has all other functions that the controller 100 is operable. This flowchart starts when the associated terminal is set as illustrated in Fig. 7, and when the assignments to the corresponding functions are completed, the flowchart ends. After completing the assignments, the terminals are set as illustrated in Fig. 8.

In step S201, the control unit 105 acquires information about the functions that the connected terminal has, and then, the processing proceeds to step S202. More specifically, the control unit 105 acquires the information about the functions (function information) from the terminal held in the connected terminal information.

In step S202, the control unit 105 selects a setting item of the operation interface 104, and the processing proceeds to step S203. More specifically, the control unit 105 selects a button or a GUI included in the operation interface 104, as an operation settable item. In the present embodiment, six items of the joystick 405, the zoom rocker switch 402, the focus dial 404, and the dials 403a to 403c correspond to the operation settable items.

In step S203, the control unit 105 determines whether the controlled terminal has the function corresponding to the item determined to have in step S202. As a result of this determination, in a case where the operation target has the function (YES in step S203), the processing proceeds to step S204. In a case where the operation target does not have the function (NO in step S203), the processing proceeds to step S205. In this case, in a case of the terminal 10a, since the terminal 10a does not have a zoom function, the processing proceeds to step S205 for setting the zoom rocker switch setting item, and the processing proceeds to step S204 for other setting items.

In step S204, the control unit 105 sets the selected setting item to "not set", and the processing proceeds to step S206.

In step S205, the control unit 105 sets the set setting item to ON. Then, the processing proceeds to step S206. In the present embodiment, the control contents of the associated terminal similar to the control contents to be performed on the controlled terminal are set. More specifically, in a case where the zoom rocker switch 402 is operated when the zoom rocker switch item is ON as in the present embodiment, the control unit 105 issues a zoom control instruction to the associated terminal.

In step S206, in a case where the selections of all the setting items are completed, the control unit 105 ends the processing. On the other hand, in a case where the selections of not all the setting items are completed, the processing returns to step S202.

As described above, according to the present embodiment, when the operation settings of the associated terminal are performed from the controller 100, the operation settings of the associated terminal are automatically performed for the functions that the controlled terminal does not have. In this way, the operation is omitted when the operation settings of the associated terminal for the functions that the controlled terminal does not have are performed. In the present embodiment, the description is given of the case where the settings of the functions that the controlled terminal does not have are automatically performed. Alternatively, the settings may be changed later manually by a user.

In a third embodiment, a case where associated terminal information is set, but the associated terminal is not connected to a controller will be described. A configuration of the controller according to the present embodiment is similar to the controller 100 according to the first embodiment, and the redundant descriptions are omitted. Points different from the first embodiment will be described below. In the present embodiment, in a case where a control for the associated terminal alone is input, the control is used to control the associated terminal in a case where the associated terminal is connected. On the other hand, in a case where the associated terminal is not connected, the control is used for operating the controlled terminal.

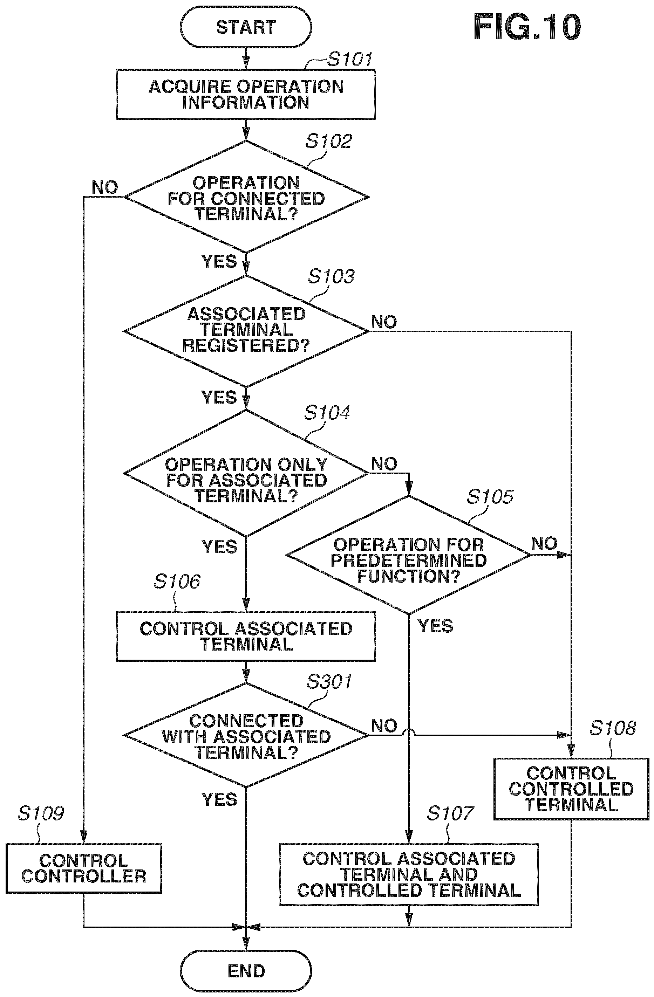

Fig. 10 is a flowchart illustrating an example of terminal interlock control processing of a terminal according to the present embodiment. The control processing for the terminal by the control unit 105 will be described with reference to the flowchart in Fig. 10 below. Processing performed in steps S101 to S109 is similar to that described in Fig. 6, and the redundant descriptions are omitted.

In step S301, the control unit 105 determines a connection state of the associated terminal. In a case where the control unit 105 determines that the associated terminal and the controller 100 are not connected (no connection) (NO in step S301), the processing proceeds to step S108. In a case where the control unit 105 determines that the associated terminal and the controller 100 are connected (YES in step S301), the processing of this flowchart ends. In this processing, in the present embodiment, the connection state of the associated terminal is determined based on the control performed in step S106. In a case where the control in step S106 is normally performed (YES in step S301), the control unit 105 determines that the associated terminal and the controller 100 are connected, and in a case where the control in step S106 is not normally performed (NO in step S301), the control unit 105 determines that they are not connected. For example, in a case where the associated terminal information illustrated in Fig. 5A is set, and when the dial 403a is operated in a case where the terminal 10d is not connected, a pan control is performed on the terminal 10c serving as the controlled terminal.

As described above, according to the present embodiment, in the case where the associated terminal is not connected with the controller 100, the control target of the operation set for the associated terminal is assigned to the operation target terminal. In this way, in the case where the associated terminal is not connected, even with the operation set in the associated terminal information, the controller 100 transmits the control command as the operation to the controlled terminal. In the present embodiment, the description is given of the case where the control instruction to be transmitted to the controlled terminal is the same as the control instruction to be transmitted to the associated terminal, in the case where the associated terminal is not connected. Alternatively, the control instruction transmitted to the associated terminal and the control instruction transmitted to the operation target terminal in the case where the associated terminal is not connected with the controller 100 may be independently set.

In a fourth embodiment, a description will be given of a display control of a GUI of a controller in a case where an associated terminal is set. A configuration of the controller according to the present embodiment is similar to the controller 100 according to the first embodiment, and the redundant descriptions are omitted. Points different from the first embodiment will be described below. In the present embodiment, the display control processing of the GUI is switched to a different form between a case where the associated terminal is set and a case where the associated terminal is not set.

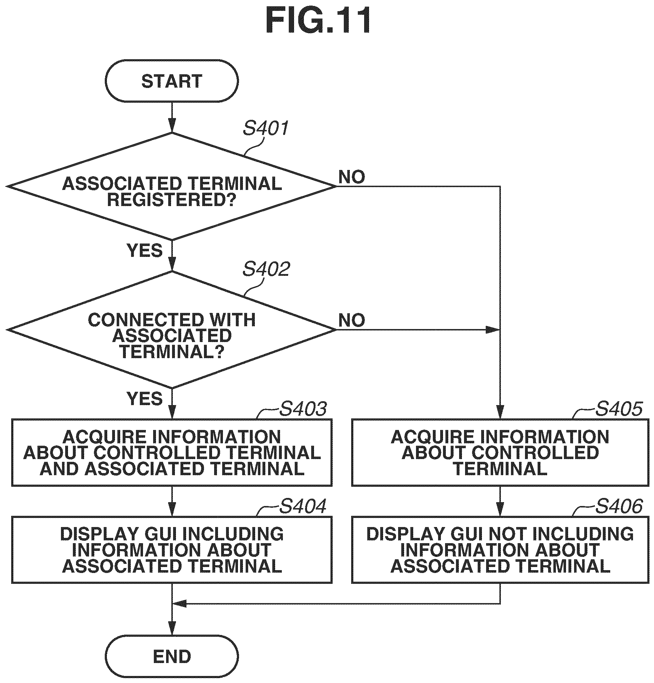

Fig. 11 is a flowchart illustrating an example of the display control processing of the GUI of a terminal according to the present embodiment. The control processing for a terminal by the control unit 105 will be described below with reference to the flowchart in Fig. 11.

In step S401, the control unit 105 acquires connected terminal information about the terminal to be displayed on the GUI from the non-volatile memory 102 and determines whether an associated terminal associated with the terminal is registered. In a case where the control unit 105 determines that an associated terminal is registered (YES in step S401), the processing proceeds to step S402. On the other hand, in a case where the control unit 105 determines that an associated terminal is not registered (NO in step S401), the processing proceeds to step S405.

In step S402, the control unit 105 determines a connection state of the associated terminal. In a case where the control unit 105 determines that the associated terminal and the controller 100 are connected (YES in step S402), the processing proceeds to step S403. On the other hand, in a case where the control unit 105 determines that the associated terminal and the controller 100 are not connected (NO in step S402), the processing proceeds to step S405.

In this processing, in the present embodiment, the connection state of the associated terminal is determined to be connected in a case where the information about the terminal is acquirable based on the camera control communication protocol, and is determined not to be connected in a case where the information about the terminal is not acquirable.

In step S403, the control unit 105 acquires predetermined information from the controlled terminal and the associated terminal. In the present embodiment, examples of the predetermined information include various kinds of setting information about the controlled terminal and the associated terminal, captured images of the controlled terminal, and captured images of the associated terminal in a case where the associated terminal is a camera.

In step S404, the control unit 105 displays the GUI including the information about the associated terminal on the display unit 103, based on the predetermined information acquired in step S403 and ends this flowchart. While, in the present embodiment, the various kinds of control information or the captured image acquired in step S403 are displayed on the display unit 103 as the predetermined information, it is not limited thereto. For example, the information transmitted from the controller 100 to the controlled terminal may be used instead of the various kinds of setting information or the captured image acquired in step S403.

In step S405, the control unit 105 acquires predetermined information from the controlled terminal. In the present embodiment, examples of the predetermined information include the various kinds of setting information about the controlled terminal, and the image captured by the controlled terminal.

In step S406, the control unit 105 displays a normal GUI not including the information about the associated terminal, based on the predetermined information acquired in step S403, and then ends the processing of this flowchart. While, in the present embodiment, the various kinds of control information or the captured image acquired in step S405 are displayed on the display unit 103 as the predetermined information, it is not limited thereto. For example, the information transmitted from the controller 100 to the controlled terminal may be used instead of the various kinds of setting information or the captured image acquired in step S405.

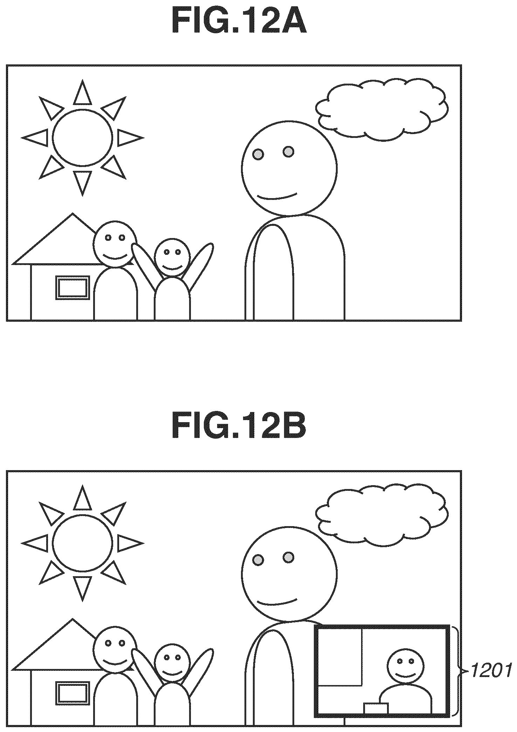

Figs. 12A and 12B are diagrams each illustrating a GUI that displays an image or images captured by the control target terminal. More specifically, Fig. 12A illustrates a GUI not including the information about the associated terminal, and Fig. 12B illustrates a normal GUI including the information about the associated terminal. More specifically, the GUI in Fig. 12A displays the captured image of the control target terminal alone, but the GUI in Fig. 12B displays, in addition thereto, the image captured by the associated terminal on a sub screen 1201. In this case, in a case where the terminal not including an image capturing unit, such as a pan/tilt head, is associated as the associated terminal, the control unit 105 may perform control to display information about various kinds of setting values. In the present embodiment, the case where the number of kinds of the GUIs including the information about the associated terminal is one is described. Alternatively, in the case where the image is displayed on the sub screen 1201 as illustrated in Fig. 12B, other information, such as a state of the associated terminal, may be displayed in a case where the associated terminal does not have a captured image distribution function.

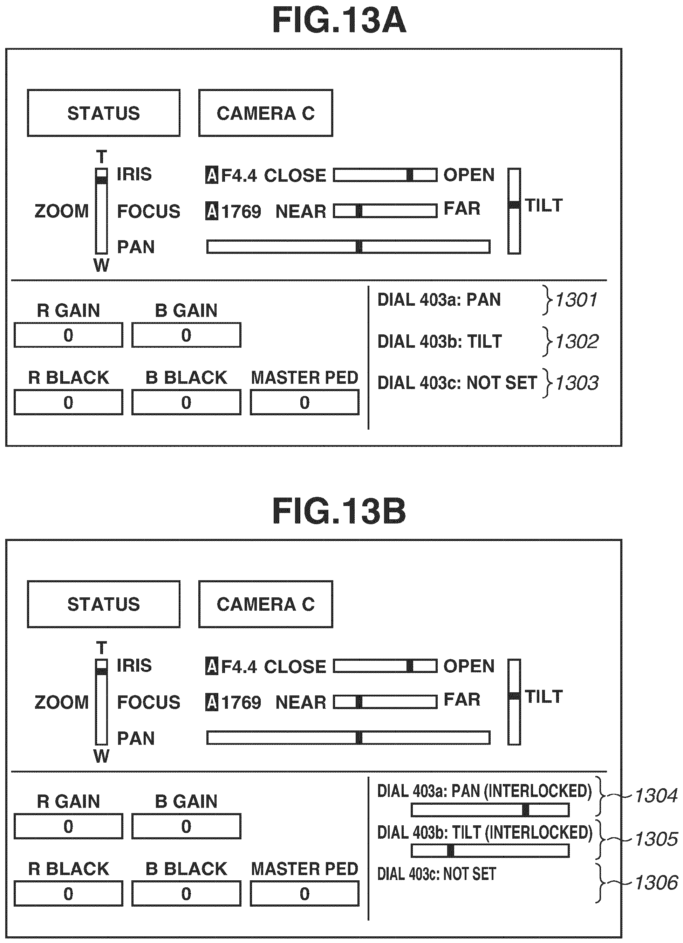

Figs. 13A and 13B are diagrams each illustrating a GUI that displays a state of the various kinds of setting values of the control target terminal, and Fig. 13A illustrates a GUI that does not include the information about the associated terminal, and Fig. 13B illustrates a GUI including the information about the associated terminal. In Fig. 13A, the information of the various kinds of setting values of the control target terminal and information 1301 to information 1303 about functions assigned to the dials 403a to 403c are displayed. However, in Fig. 13B, in addition thereto, information 1304 to information 1305 about the terminals under an interlock control is displayed in the dials 403a to 403c.

As described above, according to the present embodiment, in the case where the associated terminal is set and the information about the associated terminal is acquirable, the GUI including the information about the associated terminal is displayed in the display control of the GUI. In this way, in the case where the associated terminal is set, determination of whether the interlock control is performed on the associated terminal is able to be performed by checking the GUI without switching the control target terminals.

The present invention can also be realized by processing of supplying a program for implementing one or more functions of the above-described embodiments to a system or an apparatus via a network or a storage medium, and one or more processors in the system or the apparatus reading and executing the program. The present invention can also be realized by a circuit (e.g., application specific integrated circuits (ASIC)) that can implement one or more functions.

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc^{™} (BD)), a flash memory device, a memory card, and the like.

While the present invention has been described with reference to embodiments, it is to be understood that the invention is not limited to the disclosed embodiments but is defined by the scope of the following claims.

## Claims

1. A control apparatus (100) for controlling a plurality of terminals, comprising:
storage means (105) for storing control information including association information indicating an associated terminal associated with a controlled terminal;
reception means (104) for receiving an instruction;
control means for determining the controlled terminal and the associated terminal based on the control information and controlling the controlled terminal and/or the associated terminal, based on the received instruction and the control information,
wherein in a case where the received instruction is a first predetermined instruction, the control means determines to control both the controlled terminal and the associated terminal, based on the control information.

2. The control apparatus according to claim 1,
wherein in a case where the received instruction is a second predetermined instruction, the control means determines to control only the associated terminal, based on the control information, and
wherein in a case where the received instruction is a third predetermined instruction, the control means determines to control only the controlled terminal, based on the control information.

3. The control apparatus according to claim 2, wherein the control information specifies the first, second and third predetermined instructions corresponding to inputs from first, second and third controls on a user interface (104).

4. The control apparatus according to claim 3, wherein the control apparatus is configured to receive a user input to set the first, second and third predetermined instructions.

5. The control apparatus according to any one of the preceding claims,
wherein the control apparatus is configured to receive a user input to select the controlled terminal and the associated terminal to be associated with the controlled terminal, from among the plurality of terminals.

6. The control apparatus according to any one of the preceding claims, wherein the association information indicates a plurality of associated terminals different from the controlled terminal as associated terminals, from among the plurality of terminals.

7. The control apparatus according to any one of the preceding claims, further comprising:
acquisition means configured to acquire information about functions of the plurality of terminals,
wherein the control information is set based on the information acquired by the acquisition means.

8. The control apparatus according to any one of the preceding claims, further comprising:
determination means for determining a connection state between the associated terminal and the control means,
wherein in a case where the determination means determines that the associated terminal and the control means are not connected, the control means controls the controlled terminal.

9. The control apparatus according to any one of the preceding claims, further comprising:
display means for displaying information about a state of the controlled terminal and a state of the associated terminal.

10. A control method of controlling a plurality of terminals, comprising:
receiving an instruction;
determining a controlled terminal and an associated terminal, based on control information stored in a storage means, wherein the control information includes association information indicating the associated terminal associated with the controlled terminal; and
controlling the controlled terminal and/or the associated terminal, based on the received instruction and the control information,
wherein in a case where the received instruction is a predetermined instruction, both the controlled terminal and the associated terminal are controlled, based on the control information.

11. A computer program for causing a computer to carry out the control methos according to claim 10.
